Europäisches Patentamt

European Patent Office

Office européen des brevets

(19)

(11) Publication number: **0 305 142**

**A1**

# (12) EUROPEAN PATENT APPLICATION

(21) Application number: 88307787.7

(22) Date of filing: 23.08.88

(51) Int. Cl.⁴: **C23C 4/14**

(30) Priority: 28.08.87 US 90595

(43) Date of publication of application:
01.03.89 Bulletin 89/09

(84) Designated Contracting States:
DE FR GB IT

(71) Applicant: **Corning Glass Works**
**Sullivan Park FR-212**
**Corning New York 14831(US)**

(72) Inventor: **Lock, William Edward**
**183 Wygant Road**
**Horseheads New York 14845(US)**

(74) Representative: **Boon, Graham Anthony et al**
**Elkington and Fife Beacon House 113**
**Kingsway**
**London, WC2B 6PP(GB)**

(54) **Method of forming an article of desired geometry.**

(57) A method is set forth for producing hollow articles having high aspect ratios and articles having complex surface geometries by first forming a mandrel (14) of removable material and machining or molding the surface of the mandrel to the desired complex geometry of the finished article. The contoured mandrel (16) is coated with a material having a higher melting temperature than the mandrel, and is then thermal sprayed, such as by an arc plasma spray, with a desired composition along its longitudinal extent while the mandrel is rotated about its longitudinal axis. Finally, if a hollow product is desired, the easily removable material forming the mandrel is melted out of the product, this leaving a product of the desired complex geometries.

*Fig. 8*

# METHOD OF FORMING AN ARTICLE OF DESIRED GEOMETRY

In the past it has been extremely difficult to produce articles having intricate or complex geometries, requiring extensive and costly machining operations. Further, it has been virtually impossible to produce some shapes such as thin walled tubing having a high aspect ratio. For example, historically ceramic parts have been injection molded, cast or hot pressed, and accordingly the possible geometries which could be produced was limited by the required drafts and withdrawal limitations necessitated by the molds utilized in such processes. Further, the resulting dimensional tolerances were not precise and the parts produced in such manner had to be fired at high temperatures in order to remove any binder material.

The fabrication of ceramic parts by plasma spraying on to a mandrel is known in the art, as reported in Materials Science Monographs 6, entitled Energy and Ceramics by P. Vicenzini, Elsevier Scientific Publishing Company, 1980. The thickness of the sprayed ceramic was limited, due to shrinkage stresses, cracking and spalling. Problems were also encountered with over-heating of the mandrel. The use of disposable or removable mandrels was limited to wood, graphite, plaster and low melting alloys. However, much care was needed with these materials since the wood charred and the alloys had a tendency to melt at their surfaces during thermal spraying. As a result, re-usable mandrels or formers were preferred.

Accordingly, an object of the present invention has been to utilize thermal spray processes, which includes the arc plasma spray process, the induction plasma spray process and the arc spray process to manufacture near net shape ceramic, metal, glass, cermet, and multiple composition products of complex geometry not possible or very difficult to manufacture with today's known technology.

In its simplest form, the present invention sets forth a process for producing hollow articles having a high aspect ratio (length to width or diameter) or articles having complex geometries, by utilizing a preformed mandrel of easily machinable material, and thermal spraying such mandrel with a desired material to form a product with the desired geometry. Should a hollow product be desired, a removable mandrel/pre-form is utilized which allows the manufacture of tubes with high aspect ratios, re-entrant shapes and/or complex geometries.

The drawings schematically illustrate the preferred process steps undertaken in carrying out the method of the present invention.

Fig. 1 is a plan or elevational view of a central core member which may be utilized in the present invention.

Fig. 2 is an end view of the member shown in Fig. 1.

Fig. 3 is an elevational or plan view, partially in section, of the member shown in Fig. 1 having material applied thereto.

Fig. 4 is an end view of the unit shown in Fig. 3.

Fig. 5, in partial section, illustrates one form of a mandrel which may be formed from the unit shown in Fig. 3.

Fig. 6, also in partial section, illustrates the thermal spraying of the mandrel shown in Fig. 5.

Fig. 7 schematically illustrates a hollow product formed after the core material is removed.

Fig. 8 illustrates a further embodiment of the present invention.

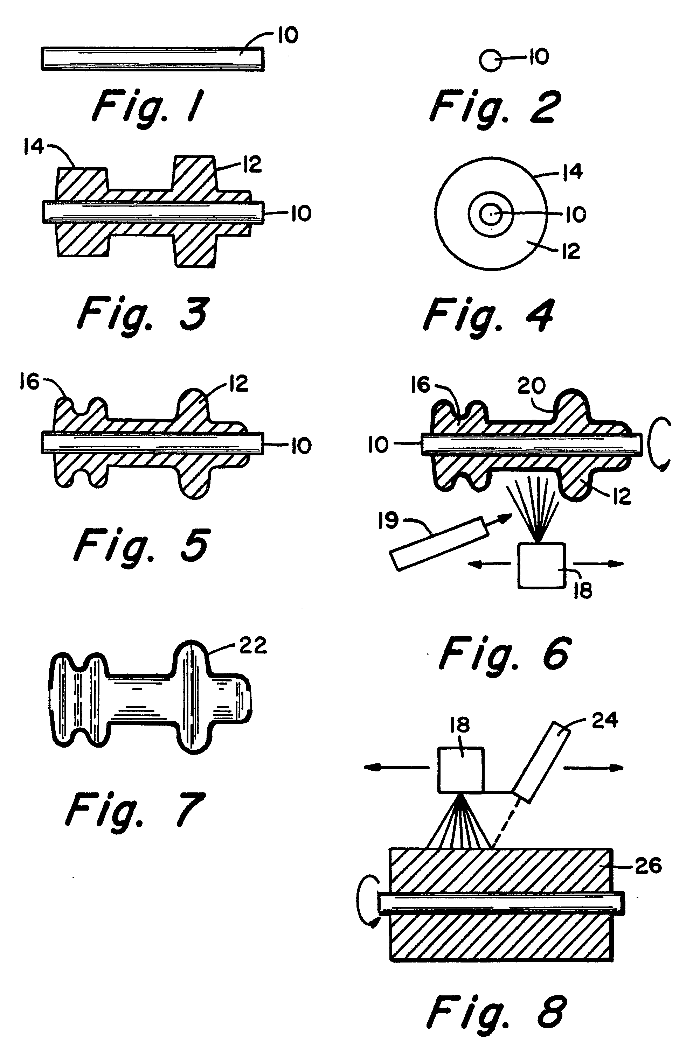

Referring now to the drawings, a central core member 10, which may be a tube or a rod, is shown having a thickness of removable material 12 applied thereto by any suitable means such as dipping, molding, casting or spraying. The removable material 12 may be a low melting alloy, such as the cerro alloys manufactured by Cerro Metal Products of Bellefonte, PA. If desired, the core member 10 may be eliminated, and the removable material 12 may be formed by itself, such as by molding. Although a uniform cylindrical or block-like body 12 may be applied to the core member 10 to produce a rough mandrel 14, in order to reduce the machining time required to produce the final mandrel, it is preferred that the applied material 12 be roughly shaped, as shown in Fig. 3, in the form of the final product to be produced. Further, the material 12 may be cast or molded to its desired shape and eliminate the need for any machining. It will be appreciated, that the material 12 is one which is easily machinable, and accordingly the material 12 of the rough mandrel 14 is machined to a desired shape to form a completed mandrel 16 as shown in Fig. 5. The central core member 10 (or a central portion of the body 12, when no central core is used) may be mounted within a suitable lathe for machining the material 12. If desired, a suitable barrier or release coating may be applied to the finished or completed mandrel 16.

The finished mandrel 16 is then rotated about its longitudinal axis, by means of the central core member 10 if utilized, and a thermal spray device, such as an arc plasma spray gun 18 is continuously traversed from end to end along the extent of the rotating mandrel 16 until the desired product thickness 20 has been achieved. In other words, it is the preformed outer contour of the finished mandrel 16 which determines the complex geometries formed by the sprayed layer product 20 formed on the mandrel 16. If desired, cooling air may be supplied by a nozzle 19 to prevent heat build-up that could prematurely melt away the mandrel material 12. The entire sprayed assembly is then placed in a heated oven at a temperature sufficient to melt the removable material 12. Accordingly, the material 12 melts and runs out from between the core member 10 and the sprayed layer 20, and if present, the core member is removed, leaving the sprayed layer as an integral product 22 by itself. When cerro alloys are utilized as the removable material 12, the oven may be heated to a temperature of about 400°F, and any residual alloy or coating material may be removed from the finished part 22 with a 10 percent hydrochloric acid solution, by cold brushing, or with other suitable chemical solutions.

As shown in Fig. 8, the thermal spray laydown may be laser glazed by having a laser 24 focused at or just behind the particle impingement on the target mandrel 26 from the arc, arc plasma, or induction plasma spray gun 18. That is, the target 26 would be rotated in a manner similar to the mandrel 16 and the thermal spray gun 18 and the laser 24 would traverse the rotating target together as a single unit. The thermal spraying process may be done in air, in a vacuum or in inert gases such as argon nitrogen or helium. In addition, a Mach 1 or Mach 2 torch may be utilized. Further, a wire spray or flame spray can also be used to build up the initial layers of the arc plasma spray layer, and mixed powders of various compositions of course can be utilized.

The mandrel 16 may be made either hollow or solid, and the core 10, when utilized, may be made of any suitable material such as glass, ceramic, metal or wood. The removable material 12 may be in the form of hard waxes, water soluble or chemically soluble glasses, or low melting alloys such as the cerro alloys. Even an inflatable mandrel appears feasible. The material 12 may be applied by casting, spraying, dipping, slush molding or injection molding. Various coatings, such as zinc and zinc alloys, hard chrome or electroless nickel may be applied to the removable material such as by spraying, dipping or sputtering to condition the surface as desired. Coated low melting cerro alloys provide a good surface for the thermal spraying, as such alloys are easily machined to complex shapes, and such material can be easily removed with modest heating of about 400°F or less. I have found that in order to preserve the surface of a low melting alloy mandrel during thermal spraying, and prevent the melting of such surfaces, it is usually necessary to apply a higher temperature coating, such as zinc and zinc alloys. Surface coatings applied to the mandrel may be removed by acid solutions or a higher temperature bake out.

In order to remove the material 12 from the sprayed layer product 20, the entire assembly may be positioned within a heating oven for a desired period of time, or heat may be merely applied to the surface of the assembly. Further, as previously mentioned, chemical solutions may be utilized to remove any remaining residue as well as electrochemical removal and cold brushing. As may be expected, the finished article 22 may be subjected to subsequent densification operations such as plasma conditioning, hipping, laser glazing and furnace consolidation.

The present invention provides many advantages and opportunities not heretofore obtainable with the known methods of manufacture. That is, not only is it possible to produce intricate shapes of complex geometries and articles having high aspect ratios, but also material choices are virtually unlimited. That is, the deposition of nearly all materials that have a melt point can be achieved by using the arc plasma spray process thus resulting in a product that is net shape as produced. Further, the materials utilized can be selected to provide almost any required function, such as surface or embedded heaters, thermal barriers, structural rigidity, and electrical conductivity/insulative properties. By varying the rate of traverse of the thermal spray gun, both thick and thin wall construction may be obtained within the same part, and by varying the composition of the particles being sprayed, it is possible to form integral multi-layered products having desired properties on various surfaces.

Although I have described the now preferred embodiments of my invention, it will be apparent to those skilled in the art that various changes and modifications may be made thereto without departing from the spirit and the scope of the invention as set forth in the appended claims.

## Claims

1. A method of forming an article of desired geometry which comprises:
providing a mandrel body of machinable material;
forming said material to a surface contour representing said desired geometry;
applying a coating to said surface contour; and
thermal spraying desired material on said coated surface contour to form an article having the desired geometry.

2. A method of forming an article as defined in claim 1 including the step of providing a central core member, and applying said machinable material thereto.

3. A method of forming an article as defined in claim 2 including the step of molding said machinable material on said central core member.

4. A method of forming an article as defined in claim 2 including the step of applying said machinable material to said central core member with a contour roughly approximating that of the desired geometry.

5. A method of forming an article as defined in claim 1 including the step of rotating said machinable material about a longitudinal axis of said mandrel body, and machining said rotating material to form the desired surface contour.

6. A method of forming an article as defined in claim 2 including the step of machining said material to form a finished mandrel body, rotating said finished mandrel body with the coating on its surface about said central core member and simultaneously traversing the length of said mandrel body with an arc plasma spray gun to deposit a predetermined thickness of a desired material on the surface contour of said mandrel to form an article of desired geometry.

7. A method of forming an article as defined in claim 6 including the step of simultaneously cooling said article as it is being produced to prevent the unwanted melting of said mandrel body.

8. A method of forming an article as defined in claim 6 including the step of simultaneously laser glazing the particles laid down by said arc plasma spray gun as said particles impinge upon the rotating mandrel.

9. A method of forming an article as defined in claim 1 including the step of applying a barrier or release layer of material to said contoured surface of said mandrel body prior to thermal spraying said surface.

10. A method of forming an article as defined in claim 1 including the steps of forming said mandrel body of machinable easily removable material, and after thermal spraying a desired thickness of material on said coated surface, melting and removing said easily removable material from the interior thereof to form a final product which is separate from said mandrel.

Fig. 1

Fig. 2

Fig. 3

Fig. 4

Fig. 5

Fig. 6

Fig. 7

Fig. 8

**European Patent Office**

**EUROPEAN SEARCH REPORT**

Application number

| | DOCUMENTS CONSIDERED TO BE RELEVANT | | EP 88307787.7 |

| Category | Citation of document with indication, where appropriate, of relevant passages | Relevant to claim | CLASSIFICATION OF THE APPLICATION (Int. Cl.4) |
|---|---|---|---|
| X | US - A - 4 162 908 (RAU)<br>* Column 4, line 41; fig. 2 * | 1,2,4,<br>5,6,9 | C 23 C 4/14 |
| Y | | 8 | |
| A | | 3,7,10 | |
| | -- | | |
| Y | DE - A1 - 3 512 176 (HEINZEL)<br>* Page 11, lines 16-21 * | 8 | |
| | -- | | |
| D,X | MATERIALS SCIENCE MONOGRAPHS, vol. 6, Energy and Ceramics, 1980, Elsevier Scientific Publishing Company, Amsterdam<br>K. T. SCOTT and A. G. CROSS "Fabrication of Ceramics by Plasma Spraying"<br>pages 596-609<br>* Page 601, lines 16,21 * | 1,2,10 | |
| | | | TECHNICAL FIELDS SEARCHED (Int. Cl.4) |
| A | | 3,4,5,<br>6,7,9 | B 28 B |
| | | | B 32 B |
| | ---- | | C 03 B |
| | | | C 04 B |
| | | | C 23 C |

The present search report has been drawn up for all claims

| Place of search | Date of completion of the search | Examiner |
|---|---|---|
| VIENNA | 04-11-1988 | GLAUNACH |